# EUROPÄISCHE PATENTANMELDUNG

(11) **EP 4 379 872 A1**
(43) Veröffentlichungstag der Anmeldung: **05.06.2024**
(21) Anmeldenummer: 23210088.3
(22) Anmeldetag: 15.11.2023
(51) Int. Cl.: H01M 8/0234, H01M 8/0239, H01M 8/0245, H01M 8/1004, H01M 8/10

(54) **GASDIFFUSIONSLAGE FÜR BRENNSTOFFZELLEN MIT EINER MIKROPORÖSEN LAGE MIT VERRINGERTEM FLUORGEHALT**

(30) Priorität: 29.11.2022 DE 102022131492
(71) Anmelder: Carl Freudenberg KG, 69469 Weinheim (DE)
(72) Erfinder: LANGNER, Dr. Joachim, 75015 Bretten (DE); BOCK, Achim, 69469 Weinheim (DE); WASCHINSKI, Christian, Dr., 69115 Heidelberg (DE); KAISER, Uwe, 69502 Hemsbach (DE); VILLING-FALUSI, Sandra, 68161 Mannheim (DE)

(57) **Zusammenfassung**

Die vorliegende Erfindung betrifft eine Gasdiffusionslage für Brennstoffzellen mit einer mikroporösen Lage mit einem polymeren Bindemittel, das fluorfrei ist oder gegenüber herkömmlichen Bindemitteln einen geringeren Anteil an fluorhaltigen Polymeren aufweist sowie die nach diesem Verfahren erhältlichen Gasdiffusionslagen und eine Brennstoffzelle, die eine solche Gasdiffusionslage enthält.

## Beschreibung

Die vorliegende Erfindung betrifft eine Gasdiffusionslage für Brennstoffzellen mit einer mikroporösen Lage mit einem polymeren Bindemittel, das fluorfrei ist oder gegenüber herkömmlichen Bindemitteln einen geringeren Anteil an fluorhaltigen Polymeren aufweist. Die Erfindung betrifft weiterhin ein Verfahren zur Herstellung einer solchen Gasdiffusionslage und eine Brennstoffzelle, die eine solche Gasdiffusionslage enthält.

### HINTERGRUND DER ERFINDUNG

Brennstoffzellen nutzen die chemische Umsetzung eines Brennstoffs, insbesondere von Wasserstoff, mit Sauerstoff zu Wasser, um elektrische Energie zu erzeugen. In Wasserstoff-Sauerstoff-Brennstoffzellen wird Wasserstoff oder ein wasserstoffhaltiges Gasgemisch der Anode zugeführt, wo eine elektrochemische Oxidation unter Abgabe von Elektronen stattfindet (H₂ → 2 H⁺ + 2 e⁻). Über eine Membran, welche die Reaktionsräume gasdicht voneinander trennt und elektrisch isoliert, erfolgt ein Transport der Protonen aus dem Anodenraum in den Kathodenraum. Die an der Anode bereitgestellten Elektronen werden über einen äußeren Leiterkreis der Kathode zugeleitet. Der Kathode wird Sauerstoff oder ein sauerstoffhaltiges Gasgemisch zugeführt, wobei eine Reduktion des Sauerstoffs unter Aufnahme der Elektronen stattfindet. Die dabei gebildeten Sauerstoffanionen reagieren mit den über die Membran transportierten Protonen unter Bildung von Wasser (1/2 O₂ + 2 H⁺ + 2 e⁻ → H₂O).

Für viele Anwendungen, speziell im automobilen Antriebsstrang, werden Protonenaustauschmembran-Brennstoffzellen (PEMFC, proton exchange membrane fuel cells, auch als polymer electrolyte membrane fuel cells bezeichnet) eingesetzt, deren Kernstück eine Polymer-Elektrolyt-Membran (PEM) ist, die nur für Protonen (bzw. Oxoniumionen H₃O⁺) und Wasser durchlässig ist und das Oxidationsmittel, im Allgemeinen Luftsauerstoff, räumlich vom Reduktionsmittel trennt. Auf die gasdichte, elektrisch isolierende, protonenleitende Membran ist auf der Anoden- und Kathodenseite eine Katalysatorschicht aufgebracht, die die Elektroden ausbildet und die in der Regel Platin als katalytisch aktives Metall enthält. In den Katalysatorschichten laufen die eigentlichen Redoxreaktionen und Ladungstrennungen ab. Membran und Katalysatorschichten bilden eine Einheit, die auch als CCM (catalyst coated membrane) bezeichnet wird. Auf beiden Seiten der CCM befindet sich eine Gasdiffusionslage (GDL), die den Zellaufbau stabilisiert und Transport- und Verteilerfunktionen für Reaktionsgase, Wasser, Wärme und Strom übernimmt. Membran, Elektroden und Gasdiffusionslage bilden die Membran-Elektroden-Einheit (MEA, membrane electrode assembly). Zwischen den Membran-Elektroden-Einheiten sind Strömungsverteilerplatten (sogenannte Bipolarplatten) angeordnet, die Kanäle zur Versorgung der angrenzenden Kathode und Anode mit Prozessgasen sowie in der Regel zusätzlich innenliegende Kühlkanäle aufweisen.

Den Gasdiffusionslagen kommt eine wesentliche Bedeutung für die Funktion und Leistungsfähigkeit der Brennstoffzelle zu. Durch sie werden zum einen die in den Elektrodenreaktionen verbrauchten und entstehenden Prozesskomponenten transportiert und zum anderen die in den Halbzellenreaktionen gebildeten und verbrauchten Elektronen und die bei der Reaktion gebildete Wärme zu den Strömungsverteilerplatten geleitet. Zudem wirkt die GDL auch als mechanischer Ausgleich zwischen der makrostrukturierten Strömungsverteilerplatte und den Katalysatorschichten. Dazu müssen Bauteiltoleranzen ausgeglichen und der Kompressionsdruck verteilt werden. Die GDL dient auch als mechanischer Schutz der sehr dünnen Membranen, die in den Brennstoffzellen hohen Lasten ausgesetzt sind. Daher werden an die mechanischen Eigenschaften der GDL hohe Anforderungen gestellt.

Gasdiffusionslagen für Brennstoffzellen bestehen typischerweise aus einem Kohlefaser-Substrat, welches mit Fluor-Polymeren (z. B. PTFE) hydrophob ausgerüstet ist und anschließend mit einer mikroporösen Lage (MPL) flächig beschichtet wird. Die MPL besteht in der Regel aus einem fluorhaltigen Polymer als Binder (z. B. PTFE) sowie einem elektrisch leitfähigen Material, wobei häufig Kohlenstoffmaterialien, wie Ruß oder GraphitPulver, verwendet werden. Andere Ansätze zur Herstellung von MPLs verwenden z.B. Ruß in einem Binder auf Silikon- oder PVA-Basis. Um einen optimalen Wasserhaushalt und Gastransport in der Brennstoffzelle zu gewährleisten muss die MPL über eine ausreichende Hydrophobizität und geeignete Porenstruktur verfügen. Zur Erzeugung von Poren kann beispielsweise den zur Herstellung der MPL verwendeten Zusammensetzungen (MPL-Pasten) ein Porenbildner, z.B. ein unter den Herstellungsbedingungen zersetzbares Polymer, wie Polymethylmethacrylat (PMMA) Partikel, oder eine gasbildende Verbindung zugesetzt werden. Wichtig für die Funktion der Brennstoffzelle ist weiterhin die mechanische Stabilität der MPL und eine ausreichende Haftung zwischen der MPL und dem GDL-Substrat.

Es besteht ein Bedarf an MPLs mit verbesserter mechanischer Stabilität, die sich z.B. dazu eignen, die CCM mit dem GDL-Substrat zu verkleben. Dabei sind in Folge der beschriebenen komplexen Zusammenhänge beim Betrieb der Brennstoffzelle mehrere Anforderungen zu berücksichtigen. So lässt sich die Haftkraft zwischen MPL und GDL-Substrat mit den bekannten fluorhaltigen Bindern verbessern, indem man den Anteil an Binder in der MPL-Beschichtung erhöht oder die MPL-Schicht tiefer in das Substrat einsinken läßt. Eine Erhöhung des Binderanteils bedeutet aber eine unerwünschte Erhöhung des Anteils an fluorhaltigen Komponenten und kann zu einer schlechteren elektrischen Leitfähigkeit führen. Auch muss bei einem tieferen Einsinken der MPL-Schicht in das Substrat der Gasdiffusionslage das Flächengewicht oberhalb der Faserschicht im Wesentlichen gleich bleiben, damit die Schutzwirkung der MPL vor Faserpenetration der Membran gewährleistet bleibt. Ein tieferes Einsinken der MPL-Schicht in das GDL-Substrat führt somit zu einer Erhöhung des Flächengewichts der MPL und in Folge davon zu einem geringeren Massentransport in der Zelle. Die derzeit eingesetzten MPL-Binder sind fluorierte Polymere, die neben der Wirkung als Bindemittel auch noch die Hydrophobie der MPL sicherstellen. Der Einsatz von Fluorpolymeren wird aufgrund ihrer geringen Abbaubarkeit und der resultierenden Umweltfolgen inzwischen kritisch gesehen und EU-weit wird eine Beschränkung von per- und polyfluorierten Alkylverbindungen (PFAS) angestrebt. Es besteht daher ein Bedarf, den Anteil an diesen Polymeren auch im Bereich der Brennstoffzellen zu reduzieren oder zukünftig ganz auf diese zu verzichten. Ein weiterer Aspekt, der bei der Optimierung der MPL-Eigenschaften zu berücksichtigen ist, besteht im Einsatz der bisher üblichen Porenbildner. So muss das Material des Porenbildners vielfach aus dem Produkt ausgetragen werden, was einen weiteren Prozessschritt verursachen kann und/oder es können ungewollte Rückstände im Produkt verbleiben. Durch den Einsatz von grobkörnigem Graphit oder Blähgraphit oder anderen Porenbildnern kann die Haftkraft der MPL herabgesetzt werden.

Die WO 97/20358 A1 betrifft eine Gasdiffusionselektrode für Polymerelektrolytmembranbrennstoffzellen mit einer Gasdiffusionslage, die ein mechanisch stabiles Stützmaterial enthält, wobei es sich um einen Vliesstoff, Gewebe oder Papier handeln kann, das Kohlefasern, Glasfasern oder Fasern organischer Polymere enthält. Zur Herstellung der Gasdiffusionselektrode wird das Stützmaterial im wesentlichen homogen mit einer Suspension imprägniert, die ein elektrisch leitfähiges Material, z.B. Ruß, und ein Bindermaterial enthält. Als geeignete Bindermaterialien werden temperaturstabile Polymere, wie z.B. perfluorierte Polymere, Polyetherketone, Polyethersulfone, Polysulfone, Polybenzimidazole, Polyphenylensulfide, Polyimide, Polyamide und Polyphenylenoxide genannt. Dieses Dokument lehrt nicht, auf die Gasdiffusionslage zusätzlich eine mikroporöse Lage aufzutragen und in dieser als Binder ein spezielles fluorfreies Hochleistungspolymer oder eine Kombination aus fluorfreien Hochleistungspolymeren und davon verschiedenen fluorhaltigen Polymeren einzusetzen.

Die WO 2022/037939 A1 betrifft eine Gasdiffusionslage für eine Brennstoffzelle mit hoher Biegesteifigkeit und hoher Biegsamkeit, umfassend
A) ein flächiges elektrisch leitfähiges Material, umfassend
   a) wenigstens ein Fasermaterial, ausgewählt unter Kohlefaser-Vliesstoffen, Kohlefaser-Geweben und Mischungen davon,
      wobei das Fasermaterial
   b1) wenigstens ein fluorhaltiges Polymer, und
   b2) wenigstens ein von b1) verschiedenes Polymer, ausgewählt unter Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon,
   darauf aufgebracht und/oder darin eingebracht enthält,
   und/oder ein Sinterungsprodukt von A)
   und
B) gegebenenfalls eine mikroporöse Lage auf einer der Flächen des elektrisch leitfähiges Materials A).
Auch dieses Dokument lehrt nicht, als Binder für die MPL ein spezielles fluorfreies Hochleistungspolymer einzusetzen.

Die US 2013/0040221 A1 beschreibt den Einsatz eines speziellen Haftvermittlers, der ein Binderharz, leitfähige Partikel und ein leitfähiges Harz enthält, um die Schichten einer Brennstoffzelle miteinander zu verbinden. Das Binderharz dient dazu, die Haftung der Schichten der Brennstoffzelle auch bei einem Verpressen bei Umgebungsdruck zu erhöhen.

Die US 2011/0200914 A1 beschreibt eine Direktoxidationsbrennstoffzelle für flüssige Brennstoffe, wie Methanol. Diese weist eine Anodenelektrode, eine Kathodenelektrode und eine Elektrolytmembran auf, wobei die Anodenelektrode eine Katalysatorschicht, eine mikroporöse Lage und eine Gasdiffusionslage umfasst. Diesem Dokument liegt die Aufgabe zugrunde, das Problem von Direktoxidationsbrennstoffzellen, einer Kathodenaustrocknung infolge eines zu hohen Methanol-Crossovers bei gleichzeitig hoher Elektrodenbeständigkeit, zu lösen. Dazu wird eine Verringerung der PTFE-Beladung der mikroporösen Lage und der Einsatz von Polymermaterialien mit bestimmten Benetzungseigenschaften, wie Polysulfon, carboxyliertes Styrol oder Nylon, gelehrt. Die beschriebene Direktoxidationsbrennstoffzelle weist diverse Nachteile auf. So enthält die Kathode ein lonomer mit geringem Äquivalentgewicht (low equivalent-weight (EW) ionomer) und gegebenenfalls zusätzlich ein hygroskopisches Material, z.B. eine Heteropolysäure, um ein Austrocknen der Kathode zu vermeiden. Diese Maßnahmen können jedoch zu einer unerwünscht hohen Protonenleitfähigkeit führen.

Der vorliegenden Erfindung liegt die Aufgabe zugrunde, ein verbessertes Bindemittel für die mikroporöse Schicht einer Gasdiffusionslage zur Verfügung zu stellen. Damit soll es insbesondere möglich sein, bei gleichbleibendem oder sogar geringerem Binderanteil die mechanische Stabilität der MPL und/oder deren Hafteigenschaften auf dem elektrisch leitfähigen Substrat zu erhalten oder gar zu verbessern. Das Bindemittel soll vorzugsweise fluorfrei sein oder gegenüber herkömmlichen Bindemitteln einen geringeren Anteil an fluorhaltigen Polymeren aufweisen. Die erhaltene MPL soll insbesondere über eine vorteilhafte Porenstruktur verfügen.

Überraschenderweise wurde nun gefunden, dass diese Aufgabe gelöst wird, wenn man zur Herstellung der mikroporösen Lage bestimmte thermoplastische Hochleistungskunststoffe einsetzt.

### ZUSAMMENFASSUNG DER ERFINDUNG

Ein erster Gegenstand der Erfindung ist eine Gasdiffusionslage für eine Brennstoffzelle, umfassend
A) ein flächiges elektrisch leitfähiges Material und
B) eine mikroporöse Lage auf wenigstens einer der Flächen des elektrisch leitfähigen Materials, wobei die mikroporöse Lage leitfähige Partikel in einem polymeren Bindemittel umfasst, das wenigstens ein fluorfreies, hochtemperaturbeständiges Polymer b1) enthält, ausgewählt unter Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon.

In einer speziellen Ausführungsform enthält das polymere Bindemittel wenigstens ein fluorfreies, hochtemperaturbeständiges Polymer b1) und wenigstens ein davon verschiedenes fluorhaltiges Polymer b2).

Ein weiterer Gegenstand der Erfindung ist ein Verfahren zur Herstellung einer Gasdiffusionslage für eine Brennstoffzelle, bei dem man
i) ein flächiges elektrisch leitfähigen Fasermaterial A) bereitstellt,
ii) das in Schritt i) bereitgestellte Fasermaterial mit einem Beschichtungsmittel zur Ausbildung einer mikroporösen Lage beschichtet, wobei das Beschichtungsmittel wenigstens ein fluorfreies, hochtemperaturbeständiges Polymer b1) enthält, ausgewählt unter Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon,
iii) das in Schritt ii) erhaltene beschichtete Fasermaterial einer thermischen Nachbehandlung unterzieht.

Ein weiterer Gegenstand der Erfindung ist eine Brennstoffzelle, umfassend wenigstens eine Gasdiffusionslage, wie zuvor und im Folgenden definiert, oder erhältlich durch ein Verfahren, wie zuvor und im Folgenden definiert.

Ein weiterer Gegenstand der Erfindung ist die Verwendung eines flächigen elektrisch leitfähigen Materials A), das auf wenigstens einer seiner Flächen eine mikroporöse Lage B) umfasst, wobei die mikroporöse Lage leitfähige Partikel in einem polymeren Bindemittel umfasst, das wenigstens ein fluorfreies, hochtemperaturbeständiges Polymer b1) enthält, ausgewählt unter Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon, als eine oder in einer Gasdiffusionslage für eine Brennstoffzelle.

Ein weiterer Gegenstand der Erfindung ist die Verwendung einer Gasdiffusionslage, wie in zuvor und im Folgenden definiert, oder erhältlich durch ein Verfahren, wie zuvor und im Folgenden definiert, in einer Protonenaustauschmembran-Brennstoffzelle.

### BESCHREIBUNG DER ERFINDUNG

Die erfindungsgemäß eingesetzten mikroporösen Lagen, die ein polymeres Bindemittel umfassen, das wenigstens ein fluorfreies, hochtemperaturbeständiges Polymer enthält, und darauf basierende Gasdiffusionslagen haben folgende Vorteile:
- Die MPLs verfügen über eine hohe mechanische Stabilität und eine gute Haftung auf dem Substrat. Dabei kann der Volumen-Anteil an Bindemittel gegenüber konventionellen fluorhaltigen Bindemitteln in der Regel gleich gehalten oder sogar verringert werden.
- Durch den Einsatz der hochtemperaturbeständigen Polymere läßt sich der Fluorgehalt in der mikroporösen Lage deutlich verringern oder ein Einsatz von fluorhaltigen Bindemitteln ganz vermeiden.
- Die eingesetzten fluorfreien, hochtemperaturbeständigen Polymere b1) sind Thermoplaste und verfügen über ein vorteilhaftes Schmelzverhalten und insbesondere gute rheologische Eigenschaften im geschmolzenen Zustand. Sie sind befähigt, die leitfähigen Partikel gut zu benetzen und zu binden.
- Die eingesetzten Bindemittel wirken sich vorteilhaft auf die Porenstruktur der MPL aus. Über die Eigenschaften der eingesetzten Binderpartikel, speziell deren Partikelgröße und Größenverteilung läßt sich die Größe und Verteilung der Poren in der MPL steuern. So ist es insbesondere möglich, einen Anteil an größeren Poren in der MPL zu erzeugen, ohne dass deren Haftkraft negativ beeinflusst wird und ohne dass dazu deren Dicke bzw. das Flächengewicht auf dem Substrat erhöht werden müsste.
- Durch den Einsatz der fluorfreien, hochtemperaturbeständigen Polymere kann die Einsatzmenge weiterer Porenbildner deutlich verringert werden oder läßt sich ein Einsatz von weiteren Porenbildnern ganz vermeiden. Es ist somit in der Regel nicht erforderlich, Maßnahmen vorzusehen, um Porenbildner aus dem Produkt auszutragen.
- Das komplexe Eigenschaftsprofil der MPL wird durch die erfindungsgemäß eingesetzten Bindemittel auch sonst nicht negativ beeinflusst. So muss insbesondere die Einsatzmenge an MPL-Beschichtungsmittel bzw. das Flächengewicht der MPL auf dem Substrat nicht erhöht werden. Die erhaltenen MPL zeigen einen guten Schutz der Polymermembran vor Faserpenetration durch Fasern aus dem GDL Substrat. Eigenschaften, wie Massentransport, Leitfähigkeit, Hydrophobie, etc. werden nicht verschlechtert.

### Flächiges elektrisch leitfähiges Material A)

Im Rahmen der Erfindung bezeichnet ein Vlies allgemein ein Flächengebilde, das mehrheitlich aus vereinzelten Fasern besteht, deren Zusammenhalt im Wesentlichen nur durch die ihnen eigene Haftung gegeben ist. Die Umwandlung eines Vlieses in einen Vliesstoff durch das Erzeugen eines festeren Verbundes zwischen den Fasern als er im Vlies vorliegt, erfolgt durch Verfahren der Vliesverfestigung, die meist in mechanische, chemische und thermische Verfahren unterteilt werden. Vliese, Vliesstoffe und Verfahren zu ihrer Herstellung sind in H. Fuchs, W. Albrecht, Vliesstoffe, 2. Auflage, Wiley-VCH, Weinheim, Germany beschrieben.

Bei dem erfindungsgemäß eingesetzten flächigen elektrisch leitfähigen Material und der Gasdiffusionslage handelt es sich um flächenförmige Gebilde, die über eine im Wesentlichen zweidimensionale, ebene Ausdehnung und eine demgegenüber geringere Dicke verfügen. Die Gasdiffusionslage weist eine Grundfläche auf, die in der Regel im Wesentlichen der Grundfläche der angrenzenden Membran mit den Katalysatorschichten und der Grundfläche der angrenzenden Strömungsverteilerplatte der Brennstoffzelle entspricht. Die Form der Grundfläche der Gasdiffusionslage kann beispielsweise polygonal (n-eckig mit n ≥ 3, z. B. dreieckig, viereckig, fünfeckig, sechseckig, etc.), kreisförmig, kreissegmentförmig (z. B. halbkreisförmig), ellipsenförmig oder ellipsensegmentförmig sein. Bevorzugt ist die Grundfläche rechteckig oder kreisförmig.

Die Gasdiffusionslage umfasst als Komponente A) wenigstens ein elektrisch leitfähiges flächiges Fasermaterial. Bevorzugt umfasst die Komponente A) ein Fasermaterial, das ausgewählt ist unter Vliesstoffen, Papieren, Geweben und Kombinationen davon. Geeignete Substratmaterialen sind Fasermaterialen, die selbst leitfähig sind oder durch Zugabe leitfähiger Additive, wie Kohlenstoff- oder Metallpartikel, leitfähig gemacht werden. Als Substratmaterial eignen sich prinzipiell Kohlenstofffasern, Glasfasern, Fasern organischer Polymere, wie Polypropylen, Polyester, Polyphenylensulfid, Polyetherketone, und Mischungen davon. Die in dem Fasermaterial A) enthaltenen Fasern umfassen oder bestehen vorzugsweise aus Kohlenstofffasern (Kohlefasern, Carbonfasern). Solche Fasermaterialien erfüllen besonders vorteilhaft die Anforderung an die GDL nach Gasdiffusivität, Flüssigwasserpermeabilität, elektrischer und thermischer Leitfähigkeit. Das Fasermaterial A) ist vorzugsweise ausgewählt unter Kohlefaser-Geweben, Kohlefaser-Papieren und Kohlefaser-Vliesstoffen. In einer bevorzugten Ausführungsform umfasst das Fasermaterial a) wenigstens einen Kohlefaser-Vliesstoff oder besteht das Fasermaterial a) aus einem Kohlefaser-Vliesstoff.

Die Herstellung der Kohlenstofffasern kann in üblicher Weise erfolgen, wobei als Ausgangsmaterial vorzugsweise Polyacrylnitril-Fasern (PAN-Fasern) eingesetzt werden.

Bei Kohlefasergeweben wird das flächige Fasermaterial durch das Verkreuzen von zwei Fadensystemen, Kette (Kettfäden) und Schuss (Schussfäden), hergestellt. Wie bei Textilien werden Faserbündel flexibel, aber unlösbar miteinander verbunden. Zur Herstellung von Kohlefasergeweben werden vorzugsweise oxidierte, aber noch nicht karbonisierte oder graphitierte PAN-Fasern eingesetzt. Die Karbonisierung oder Graphitierung, um dem flächigen Fasermaterial elektrische Leitfähigkeit zu verleihen, erfolgt nach dem Weben.

Zur Herstellung von Kohlefaser-Papieren werden bevorzugt graphitisierte PAN-Fasern eingesetzt. Diese werden in an sich bekannter Weise zu Faserbruchstücken zerkleinert, aufgeschlämmt und analog zur Papierherstellung durch Sieben (Bütten) ein Fasergelege hergestellt und getrocknet. In einer bevorzugten Ausführung wird in das Papier zusätzlich wenigstens ein Bindemittel eingebracht. Geeignete Bindemittel sind z. B. Phenol-, Furan-, Polyimidharze, etc. Zum Einbringen des Bindemittels kann das Papier mit diesem imprägniert und das Bindemittel gegebenenfalls anschließend gehärtet werden. Nach dem Imprägnieren und Härten wird das Kohlefaser-Papier nochmals einer Karbonisierung/Graphitisierung unterzogen, um auch das Bindemittel in Verbindungen mit verbesserter elektrischer Leitfähigkeit zu überführen. In einer weiteren geeigneten Ausführung wird zur Bereitstellung des Fasermaterials A) ein gefülltes Kohlefaser-Papier eingesetzt. Die Herstellung erfolgt zunächst wie zuvor beschrieben, jedoch wird anstelle des Einbringens eines Bindemittels und der Karbonisierung/Graphitisierung ein Füllstoff aus einem Kohlenstoffmaterial in einem polymeren Binder in das noch feuchte Papier eingebracht. Speziell wird dazu ein Kohlenstoff-PTFE-Füllstoff eingesetzt. Durch diese Füllung wird die thermische und elektrische Leitfähigkeit so erhöht, dass eine Karbonisierung/Graphitisierung entfallen kann.

Zur Herstellung von Kohlefaser-Vliesstoffen können nicht oxidierte oder oxidierte PAN-Fasern eingesetzt werden. In einer ersten bevorzugten Ausführungsform werden die Fasern in einem ersten Schritt trocken zu einem Flor gelegt (kardiert) und anschließend zu einem Vliesstoff verfestigt. Dies kann beispielsweise durch Wasserstrahlverfilzung (hydro-entangling) erfolgen, wobei die Karbonfasern orientiert, verschränkt und somit mechanisch stabilisiert werden. Gegebenenfalls kann die Dicke des verfestigten Vliesstoffs auf einen gewünschten Wert kalibriert werden. Vliesstoffe auf Basis nicht oxidierter PAN-Fasern werden nach dem Vlieslegen und Verfestigen zunächst der Oxidation bei erhöhter Temperatur und unter Sauerstoffatmosphäre und anschließend der Karbonisierung/Graphitisierung unter Inertgasatmosphäre unterzogen. Vliesstoffe auf Basis oxidierter PAN-Fasern werden nach dem Vlieslegen und Verfestigen nur einer Karbonisierung/Graphitisierung unterzogen.

In einer ersten speziellen Ausführung wird als Fasermaterial A) ein mechanisch gebundenes Fasermaterial eingesetzt. In einer weiteren speziellen Ausführung wird als Fasermaterial A) ein Vliesstoff eingesetzt, in den wenigstens ein Bindemittel eingebracht wurde, das gegebenenfalls anschließend gehärtet wurde. Geeignete Bindemittel sind z.B. Phenol-, Furan-, Polyimidharze, etc. Das Einbringen des Bindemittels kann sich z. B. an die Karbonisierung/Graphitisierung anschließen und das erhaltene imprägnierte Vlies abschließend nochmals (zur Trocknung und/oder Sinterung) thermisch behandelt werden.

Bei dem flächigen elektisch leitfähigen Material A) handelt es sich bevorzugt um einen Faserverbundwerkstoff, der ein Fasermaterial umfasst, das vorzugsweise ausgewählt unter Kohlefaser-Vliesstoffen, Kohlefaser-Geweben und Mischungen davon.

Speziell umfasst der Faserverbundwerkstoff wenigstens ein Fasermaterial und darauf aufgebracht und/oder darin eingebracht
a1) wenigstens ein polymeres Additiv,
a2) gegebenenfalls wenigstens ein leitfähigkeitsverbesserndes Additiv,
a3) gegebenenfalls wenigstens ein weiteres Additiv.

Das polymere Additiv a1) ist vorzugsweise ausgewählt unter fluorhaltigen Polymeren a11), fluorfreien hochtemperaturbeständigen Polymeren a12), davon verschiedenen Polymeren a13) und Mischungen davon.

Um die Transportvorgänge durch die GDL und an den Grenzflächen zu verbessern, kann es vorteilhaft sein, die Hydrophobizität des Fasermaterials A) zu erhöhen. Geeignete polymere Additive a1), die beispielsweise als Bindemittel wirken und gleichzeitig die Hydrophobizität erhöhen, sind fluorhaltige Polymere a11). Prinzipiell geeignet als fluorhaltige Polymere a11) sind die als polymere Bindemittel der mikroporösen Lage eingesetzten fluorhaltigen Polymere b2). Vorzugsweise enthält das Fasermaterial dann wenigstens ein fluorhaltiges Polymer a11) darauf aufgebracht und/oder darin eingebracht. Das fluorhaltiges Polymer a11) ist vorzugsweise ausgewählt unter Polytetrafluorethylenen (PTFE), Tetrafluorethylen-Hexafluorpropylen-Copolymeren (FEP), Perfluoralkoxy-Polymeren (PFA) und Mischungen davon. Perfluoralkoxy-Polymere sind z.B. Copolymere aus Tetrafluorethylen (TFE) und Perfluoralkoxyvinylethern, wie Perfluorvinylpropylether. Bevorzugt wird als Polymer a11) ein Polytetrafluorethylen eingesetzt. Das Fasermaterial kann durch übliche Imprägnierungsverfahren mit dem fluorhaltigen Polymer a11) ausgerüstet werden. Dazu kann z.B. eine PTFE-Dispersion in einem Tauchbad appliziert, das Lösungsmittel verdampft und das behandelte Fasermaterial bei erhöhten Temperaturen von in der Regel wenigstens 300 °C gesintert werden.

Bevorzugt beträgt der Massenanteil des polymeren Additivs a1) 0,5 bis 50 %, bevozugt 1 bis 40 %, bezogen auf die Masse des elektrisch leitfähigen Materials A). In einer speziellen Ausführung umfasst das polymere Additiv a1) wenigstens ein fluorhaltiges Polymer a11). Bevorzugt beträgt der Massenanteil des fluorhaltigen Polymers a11) dann 0,5 bis 40 %, bevozugt 1 bis 30 %, bezogen auf die Masse des elektrisch leitfähigen Materials A).

Bevorzugt umfasst das polymere Additiv a1) wenigstens ein fluorfreies, hochtemperaturbeständiges Polymer a12), wie sie erfindungsgemäß als Komponente b1) zur Herstellung der mikroporösen Lage B) eingesetzt werden. Das fluorfreie, hochtemperaturbeständige Polymer a12) ist dann bevorzugt ausgewählt unter Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon. Bevorzugt beträgt der Massenanteil des fluorfreien Polymers a12) dann 0,5 bis 40 %, bevozugt 1 bis 30 %, bezogen auf die Masse des Fasermaterials A).

In einer speziellen Ausführungsform umfasst das Bindemittel a1) eine Mischung aus wenigstens einem fluorhaltigen Polymer a11) und wenigstens einem fluorfreien, hochtemperaturbeständigen Polymer a12). Bevorzugt beträgt der gesamte Massenanteil der Polymere a11) und a12) dann 0,5 bis 40 %, bevozugt 1 bis 30 %, bezogen auf die Masse des elektrisch leitfähigen Materials A).

Das Additiv a1) kann wenigstens ein weiteres von a11) und a12) verschiedenes Polymer a13) umfassen. Geeignete Polymere a13) sind z. B. ausgewählt unter Phenolharzen, Furanharzen, Polyimidharzen und Mischungen davon. Speziell enthält das polymere Additiv a1) von den fluorhaltigen Polymeren a11) und den Polymeren a12) verschiedene weitere Polymere a13) in einem Gewichtsanteil von höchstens 5 %, bevorzugt von höchstens 1 %, besonders bevorzugt von höchstens 0,5 %, insbesondere von höchstens 0,1 %, bezogen auf das Gesamtgewicht des elektrisch leitfähigen Materials A), darauf aufgebracht und/oder darin eingebracht. Noch spezieller enthält das elektrisch leitfähige Material A) keine Zusätze von weiteren Polymeren a13), die von den fluorhaltigen Polymeren a11) und den Polymeren a12) verschieden sind.

Vielfach verfügt das als elektrisch leitfähiges Material eingesetzte Fasermaterial A) bereits durch die eingesetzten Kohlenstofffasern, auch ohne leitfähigkeitsverbessernde Additive, über eine gute elektrische und thermische Leitfähigkeit. Zur Verbesserung der elektrischen und der thermischen Leitfähigkeit kann das Fasermaterial A) jedoch zusätzlich mit wenigstens einem leitfähigkeitsverbessernden Additiv a2) ausgerüstet werden. Bevorzugt ist das leitfähigkeitsverbessernde Additiv a2) ausgewählt unter Metallpartikeln, Ruß, Graphit, Graphen, Kohlenstoffnanoröhren (CNT), Kohlenstoffnanofasern und Mischungen davon. Bevorzugt umfasst das leitfähigkeitsverbessernde Additiv a2) Ruß oder besteht aus Ruß. Die Ausrüstung des Fasermaterials A) mit wenigstens einem leitfähigkeitsverbessernden Additiv a2) kann beispielsweise gemeinsam mit dem polymeren Additiv a1) und/oder weiteren Additiven a3) erfolgen.

Bevorzugt beträgt der Massenanteil des leitfähigkeitsverbessernden Additivs a2) 0,5 bis 45 %, bevozugt 1 bis 25 %, bezogen auf die Masse des Fasermaterials A). In einer speziellen Ausführungsform umfasst das leitfähigkeitsverbessernde Additiv a2) Ruß oder besteht aus Ruß und beträgt der Massenanteil 0,5 bis 45 %, bevozugt 1 bis 25 %, bezogen auf die Masse des Fasermaterials A).

Die Fasermaterialen A) können zusätzlich wenigstens ein weiteres Additiv a3) enthalten. Dazu zählen z.B. oberflächenaktive Substanzen. Die Ausrüstung des Fasermaterials A) mit wenigstens einem weiteren Additiv a3) kann gemeinsam mit dem polymeren Additiv a1) und/oder leitfähigkeitsverbessernden Additiven a2) erfolgen. Bevorzugt beträgt der Gesamtmassenanteil an weiteren Additiven a3) 0 bis 80 %, bevozugt 0 bis 50 %, bezogen auf die Masse des Fasermaterials A).

Das Fasermaterial A) weist vorzugsweise eine Dicke im Bereich von 50 bis 500 µm, besonders bevorzugt von 100 bis 400 µm auf. Diese Dicke bezieht sich auf den nicht ausgerüsteten, unkomprimierten Zustand des Fasermaterials A), d. h. vor dem Einbau der GDL in eine Brennstoffzelle.

Das Fasermaterial A) kann durch übliche Verfahren mit den Komponenten a1) und gegebenenfalls a2) und/oder a3) ausgerüstet werden. Bevorzugt wird zur Ausrüstung des Fasermaterials A) eine wässrige Dispersion eingesetzt. Geeignete Beschichtungs- und Imprägnierverfahren werden im Folgenden näher beschrieben.

In einer speziellen Ausführungsform wird das mit den Komponenten a1) und gegebenenfalls a2) und/oder a3) ausgerüstete Fasermaterial A) einer thermischen Behandlung (Trocknung und/oder Sinterung) unterzogen. Die thermische Behandlung des Fasermaterials A) erfolgt vorzugsweise bei einer Temperatur von wenigstens 250 °C, bevorzugt von wenigstens 300 °C, insbesondere in einem Bereich von 300 bis 450 °C. Die thermische Behandlung kann auch nach dem Auftrag der mikroporösen Lage B) erfolgen, wie dies im Folgenden genauer beschrieben wird.

### Mikroporöse Lage B)

Die erfindungsgemäße Gasdiffusionslage besteht aus einem zwei- oder mehrlagigen Schichtverbund auf Basis eines flächigen, elektrisch leitfähigen Materials A) und einer mikroporösen Lage (MPL) B) auf einer der Flächen des Fasermaterials A).

Erfindungsgemäß umfasst die mikroporöse Lage B) leitfähige Partikel in einer Matrix aus einem polymeren Bindemittel. Die leitfähigen Partikel sind vorzugsweise ausgewählt unter Ruß, Graphit, Graphen, Kohlenstoffnanoröhren (CNT), Kohlenstoffnanofasern und Mischungen davon. Bevorzugt wird Ruß, Graphit oder eine Mischung davon eingesetzt. Das polymere Bindemittel enthält wenigstens ein fluorfreies, hochtemperaturbeständiges Polymer b1), das vorzugsweise ausgewählt ist unter Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon. Gegebenenfalls enthält das polymere Bindemittel wenigstens ein weiteres, von den Polymeren b1) verschiedenes Polymer. Zusätzlich kann zur Herstellung der mikroporösen Lage wenigstens ein Additiv eingesetzt werden. Geeignete Additive sind beispielsweise Porenbildner.

Das Polymer b1) ist speziell ausgewählt unter sogenannten Hochleistungskunststoffen, die sich durch Eigenschaften, wie eine hohe Glasübergangstemperatur, eine hohe Schmelztemperatur, gute Temperaturbeständigkeit, gute Chemikalienbeständigkeit und gute mechanische Eigenschaften auszeichnen. Bevorzugt weisen die Polymere b1) eine dauerhafte Betriebstemperatur (Dauergebrauchstemperatur) von wenigstens 150°C auf. Insbesondere handelt es sich bei den Polymeren b1) um Thermoplaste.

Bevorzugt als Polymere b1) sind teilaromatische und aromatische Polymere.

Die Polymere b1) sind vorzugsweise ausgewählt unter Polyaryletherketonen (PAEK), Polyphenylensulfiden (PPS), Polysulfonen (PSU), Polyethersulfonen (PES), teilaromatischen (Co)polyamiden (Hochtemperaturpolyamiden, HTPA), Polyimiden (PI), Polyamidimiden (PAI), Polyetherimiden (PEI) und Mischungen (Blends) davon.

Geeignete Polymere b1) sind auch (teil)aromatische Polyester, wie PET oder PBT, Polycarbonate (PC) und temperaturbeständige Melamine, wie mit nanoporösen SiO₂-Aerogelen gefüllte Melaminschäume.

In einer bevorzugten Ausführung umfasst die Polymerkomponente b1) wenigstens ein Polyaryletherketon. Speziell besteht die Polmerkomponente b1) aus wenigstens einem Polyaryletherketon. Polyaryletherketone (PAEK) sind teilkristalline Thermoplaste, die einen alternierenden Aufbau aufweisen, bei dem auf eine Arylgruppe jeweils eine Ketogruppe (Carbonylgruppe) oder Ethergruppe folgt, wobei die Anteile an den Keto- und Ethergruppen variabel sind und sich im Substitutionsmuster an den Arylringen unterscheiden können. Geeignete Polyaryletherketone b1) sind Polyetherketone (PEK), Polyetheretherketone (PEEK), Polyetherketonketone (PEKK), etc. Bevorzugt umfasst die Polymerkomponente b1) wenigstens ein Poletheretherketon oder besteht aus wenigstens einem Polyetheretherketon.

Geeignete teilaromatischen (Co)polyamiden b1) sind die als Hochtemperaturpolyamide (HTPA) bezeichneten Polymere. Dabei handelt es sich um teilkristalline oder amorphe, thermoplastische, teilaromatische Polyamide. Bevorzugt enthalten diese wenigstens eine aromatische Dicarbonsäure einpolymerisiert, insbesondere ausgewählt unter Terephthalsäure, Isophthalsäure und Gemischen aus Terephthalsäure und Isophthalsäure. Bevorzugte teilaromatische (Co)polyamide b1) sind ausgewählt unter PA 6.T, PA 10.T, PA 12.T, PA 6.I, PA 10.1, PA 12.1, PA 6.T/6.I, PA 6.T/6, PA 6.T/10T, PA 10.T/6.T, PA 6.T/12.T, PA12.T/6.T und Gemischen davon. Eine weitere spezielle Ausführungsform der Polyamide b1) ist Polyphthalamid (PPA).

Geeignete Polyimide b1) sind Polysuccinimid (PSI), Polybismaleinimid (PBMI), Polyimidsulfon (PISO) und Polymethacrylimid (PMI).

Insbesondere enthält das polymere Bindemittel wenigstens ein fluorfreies, hochtemperaturbeständiges Polymer b1) und wenigstens ein davon verschiedenes fluorhaltiges Polymer b2). Das fluorhaltiges Polymer b2) ist vorzugsweise ausgewählt unter Polytetrafluorethylenen, Tetrafluorethylen-Hexafluorpropylen-Copolymeren, Perfluoralkoxy-Polymeren und Mischungen davon. Bevorzugt wird als Polymer b2) ein Polytetrafluorethylen eingesetzt.

In einer bevorzugten Ausführungsform enthält das polymere Bindemittel wenigstens ein Polymer b1) und wenigstens ein Polymer b2), wobei b1) ein Polyetheretherketon (PEEK) umfasst oder daraus besteht und b2) Polytetrafluorethylen (PTFE) umfasst oder daraus besteht.

Vorzugsweise wird zur Herstellung der mikroporösen Lage B) das polymere Bindemittel in einer Gewichtsmenge von 0,5 bis 50 Gew.-%, besonders bevorzugt von 1,0 bis 40 Gew.-%, insbesondere 10 bis 25 Gew.-%, bezogen auf des Gesamtgewicht aus polymeren Bindemitteln und leitfähigen Partikeln eingesetzt.

Bevorzugt liegt das Gewichtsmengenverhältnis von b1) zu b2) in einem Bereich von 1,0 : 99,0 bis 100 : 0, vorzugsweise in einem Bereich von 5,0 : 95,0 bis 95,0 : 5,0.

Die erfindungsgemäßen MPLs verfügen über eine vorteilhafte Porenstruktur. Es wurde gefunden, dass es mit dem eingesetzten Bindemittel möglich ist, einen Anteil an größeren Poren in der MPL zu erzeugen, ohne dass deren Haftkraft negativ beeinflusst wird und ohne dass dazu deren Dicke bzw. das Flächengewicht auf dem Substrat erhöht werden müsste. Auch durch die Wahl der leitfähigen Partikel kann die Porengröße und die Porengrößenverteilung beeinflusst werden. So lassen sich z.B. durch den Einsatz von Graphit, speziell durch den Einsatz von grobkörnigem Graphit oder Blähgraphit, als leitfähige Partikel in der MPL in der Regel größere Poren erzeugen, als durch den Einsatz von Ruß. Weiterhin kann das Gesamtporenvolumen, die Anzahl der Poren und deren Größenverteilung durch den Einsatz von Porenbildnern beeinflusst werden. Geeignete Porenbildner sind beispielsweise kommerziell erhältliche Kunststoffpartikel, z. B. aus Polymethylmethacrylat (PMMA). Der Einsatz von Porenbildnern ist eine geeignete, aber nicht bevorzugte Maßnahme. In der Regel ist es durch den Einsatz des erfindungsgemäßen Bindemittels auf Basis wenigstens eines Polymers b1) möglich, auf den Einsatz weiterer Porenbildner zu verzichten.

Die Bestimmung der Porengrößenverteilung und Porosität kann mittels Quecksilberporosimetrie erfolgen, wie dies in der DIN ISO 15901-1:2019-03: Quecksilberporosimetrie, beschrieben ist. Der Porendurchmesser ist bei der Quecksilberporosimetrie indirekt proportional zum aufgewandten Druck. Für im Wesentlichen zylindrische Poren wird dieser Zusammenhang durch die sogenannte Washburn-Gleichung beschrieben.

Bevorzugt weisen wenigstens 90 % der Poren, bezogen auf das Gesamtvolumen aller Poren der mikroporösen Lage einen Porendurchmesser auf, der in einem Bereich von 20 nm bis 25 Mikrometer (µm), besonders bevorzugt von 25 nm bis 20 µm, liegt. Die Bestimmung der Porengrößenverteilung und des Gesamtporenvolumens erfolgt durch Quecksilberporosimetrie.

Die Porengröße kann eine monomodale, bimodale oder polymodale Verteilungskurve aufweisen. Eine bimodale oder polymodale Verteilungskurve kann beispielsweise durch den Einsatz verschiedener leitfähiger Partikel (z.B. einer Mischung aus Ruß und Graphit) oder eine geeignete Kombination leitfähiger Partikel mit fluorfreien, hochtemperaturbeständigen Polymer b1) entsprechender Teilchengröße erzielt werden. Es wurde gefunden, dass speziell über die Eigenschaften der eingesetzten Binderpartikel, insbesondere deren Partikelgröße und Größenverteilung, die Größe und Verteilung der Poren in der MPL gesteuert werden kann.

In einer speziellen Ausführungsform weist die Porengröße eine bimodale Verteilung auf.

Bevorzugt wird das fluorfreie, hochtemperaturbeständige Polymer b1) zur Herstellung der mikroporösen Lage in partikulärer Form mit einem mittleren Teilchendurchmesser, gemessen als d90-Wert, in einem Bereich von 0,1 bis 50 µm, bevorzugt in einem Bereich von 0,25 bis 30 µm, eingesetzt. Somit läßt sie ein höherer Anteil an größeren Poren erzielen. Die Teilchengröße wurde bei 10 % Feststoffgehalt in wässriger Dispersion per dynamischer Lichtstreuung bestimmt, wie dies in der DIN ISO 22412:2018-09 beschrieben ist.

Bevorzugt weist die mikroporöse Lage eine Dicke im unkomprimierten Zustand von 5 bis 100 Mikrometer, bevorzugt 10 bis 50 Mikrometer, auf. Diese Dicke bezieht sich auf den unkomprimierten Zustand der mikroporösen Lage B), d. h. vor dem Einbau der GDL in eine Brennstoffzelle.

Die erfindungsgemäße Gasdiffusionslage weist vorzugsweise eine Dicke (Gesamtdicke aus Fasermaterial A) und MPL B)) im Bereich von 50 bis 1000 µm, besonders bevorzugt von 75 bis 500 µm auf. Diese Dicke bezieht sich auf den komprimierten Zustand der GDL unter einem Druck von 6 bar.

Die Bestimmung der Dicke einer unkomprimierten Gasdiffusionslage kann nach der DIN 53855-1:1993-08 "Bestimmung der Dicke textiler Flächengebilde" erfolgen. Die Bestimmung der Dicke bei einer bestimmten Druckkraft (z.B. bei 0,025 MPa, bei 0,6 MPa oder bei 1,0 MPa) kann in einer Vorrichtung zur Messung des Compression Sets, wie zuvor ausführlich beschrieben, erfolgen.

Die Bestimmung der flächenbezogenen Masse (auch als Flächengewicht bezeichnet) in g/m² kann nach EN 29073-1:1992 erfolgen.

### Herstellungsverfahren

Ein weiterer Gegenstand der Erfindung ist ein Verfahren zur Herstellung einer Gasdiffusionslage für eine Brennstoffzelle, bei dem man
i) ein flächiges elektrisch leitfähigen Fasermaterial A) bereitstellt,
ii) das in Schritt i) bereitgestellte Fasermaterial mit einem Beschichtungsmittel zur Ausbildung einer mikroporösen Lage beschichtet, wobei das Beschichtungsmittel vorzugsweise wenigstens ein fluorfreies, hochtemperaturbeständiges Polymer b1) enthält, ausgewählt unter Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon,
iii) das in Schritt ii) erhaltene beschichtete Fasermaterial einer thermischen Nachbehandlung unterzieht.

In Schritt i) des erfindungsgemäßen Verfahrens wird wenigstens ein Fasermaterial A) bereitstellt, wobei bezüglich geeigneter und bevorzugter Fasermaterialien auf die zuvor gemachten Ausführungen in vollem Umfang Bezug genommen wird. Die Fasermaterialien können vor dem Einsatz in Schritt ii) mit üblichen Bindemitteln und/oder Additiven ausgerüstet werden, wie dies ebenfalls zuvor beschrieben ist. Dazu können übliche Imprägnierungsverfahren zum Einsatz kommen. Das gegebenenfalls ausgerüstete Fasermaterial A) kann vor dem Einsatz in Schritt ii) einer thermischen Behandlung (Trocknung und/oder Sinterung) unterzogen werden.

Das in Schritt i) bereitgestellte Fasermaterial wird in Schritt ii) mit dem Beschichtungsmittel zur Ausbildung einer mikroporösen Lage beschichtet. Bevorzugt wird das Fasermaterial mit einer wässrigen Zusammensetzung beschichtet und/oder imprägniert, die wenigstens ein fluorhaltiges Polymer b1), gegebenenfalls wenigstens ein fluorhaltiges Polymer b2), leitfähige Partikel und gegebenenfalls weitere Additive enthält. Dabei können alle Komponenten zur Ausbildung der MPL in einer einzigen Zusammensetzung zur Beschichtung des Fasermaterials A) eingesetzt werden. Es ist auch möglich, die Beschichtung des Fasermaterials A) mit zwei oder mehr Beschichtungsmitteln durchzuführen, die jeweils eine oder mehrere Komponenten enthalten.

Bezüglich geeigneter und bevorzugter Polymere b1) und b2) wird auf die zuvor gemachten Ausführungen in vollem Umfang Bezug genommen.

Auftragen der MPL kann auf verschiedene Arten erfolgen. Während in einer diskontinuierlichen Herstellung häufig Sprüh-, Siebdruck- oder Meyer-Rod-Verfahren eingesetzt werden, kommen bei der kontinuierlichen Beschichtung bevorzugt Rakel-, Schlitzdüsen- und Gravurwalzenprozesse zum Einsatz. Dabei können die MPL-Schichtdicke und die Eindringtiefe durch die Beschichtungsprozessparameter sowie die Viskosität der Beschichtung beeinflusst werden.

Abschließend erfolgt eine erneute thermische Behandlung, z. B. in einem Trocknungs-und Sinterofen. Dabei kann beispielsweise zunächst eine Trocknung bei einer Temperatur von 100 bis 200°C und anschließend eine Sinterung bei einer Temperatur von 300 bis 500°C erfolgen.

Bevorzugt erfolgt die thermische Behandlung in Schritt ii) bei einer Temperatur, bei der das polymere Bindemittel teilweise oder vollständig geschmolzen vorliegt. Speziell erfolgt die thermische Behandlung in Schritt ii) oberhalb der Schmelztemperatur des Polymers b1) oder, wenn das Beschichtungsmittel mehr als ein Polymer b1) enthält, oberhalb des Schmelzpunkts des Polymers b1) mit dem niedrigsten Schmelzpunkt, vorzugsweise oberhalb des Schmelzpunkts des Polymers b1) mit dem höchsten Schmelzpunkt.

### Eigenschaften

Die mikroporöse Lage und/oder die Gasdiffusionslage weisen in der Regel vorteilhafte Eigenschaften bezüglich der folgenden Parameter auf:
- die Adhäsion der MPL auf dem Fasermaterial,
- den Compression Set-Wert,
- den elektrischen Durchgangswiderstand der Gasdiffusionslage durch die Materialebene.

### Adhäsion:

Die Bestimmung der MPL-Adhäsion kann nach der ASTM-Norm D6862-11 erfolgen. Die Bestimmung der Schälfestigkeit der Verbindung zwischen MPL und Fasermaterial erfolgte unter einem Winkel von 90 Grad bei einer Temperatur von 23°C, einer relativen Feuchte von 48% und einer Prüfgeschwindigkeit von 20 mm/min an einer Probe von 19 mm Breite. Als adhäsives Material wurde Scotch-Tape verwendet.

Bevorzugt weist die erfindungsgemäße MPL einen Mittelwert der Adhäsion auf der GDL von wenigstens 30 N/m auf. Es wurde gefunden, dass durch den teilweisen oder vollständigen Ersatz des fluorhaltigen Polymers b2) durch wenigstens ein fluorfreies, hochtemperaturbeständiges Polymer b1) die Adhäsion weiter gesteigert werden kann. Dies gilt speziell für den Ersatz von PTFE durch wenigstens ein PEEK. Speziell weist die erfindungsgemäße MPL einen Mittelwert der Adhäsion auf der GDL von wenigstens 32 N/m, spezieller von wenigstens 40 N/m, auf.

### Compression Set-Wert:

Der Compression Set-Wert ist ein Maß dafür, wie sich ein Material, vorliegend eine GDL, bei einer Druckverformung und anschließender Entspannung verhält. GDLs werden beim Einsatz in Brennstoffzellen in der Regel stark verpresst (komprimiert). Zur Charakterisierung der Eigenschaften einer GDL infolge der Kompression kann der Anteil der elastischen und plastischen Verformung (sowie gegebenenfalls die Angabe weiterer physikalischer Größen, wie die Gasdurchlässigkeit und der elektrische Widerstand) herangezogen werden. Von einer plastischen Verformung spricht man, wenn ein Material, wie eine Gasdiffusionslage, nach einer Belastung nicht wieder zu 100% in die ursprüngliche Form zurückkehrt, sondern eine permanente Formänderung zurückbleibt. Der Compression Set ist die bleibende Verformung, die nach Aufhebung der einwirkenden Kraft verbleibt. Die Bestimmung des Compression Set-Werts kann in der folgenden Art und Weise erfolgen. Es ist möglich, gleichzeitig die Werte weiterer physikalischer Größen, wie der Dicke, der Gasdurchlässigkeit, des elektrischen Widerstands, jeweils bei einer bestimmten Druckkraft und nach einmaliger oder mehrfacher Krafteinwirkung zu bestimmen.

Aus der zu prüfenden GDL werden über die gesamte Breite drei Proben (links, rechts und Mitte) entnommen. Weist das Material herstellungsbedingt eine Maschinenrichtung auf, so werden die Proben senkrecht zur Maschinenrichtung entnommen (CMD). Die Proben sind ringförmig mit einem inneren Durchmesser von 45 mm und einem äußeren Durchmesser von 56 mm. Die Probenfläche beträgt 8,72577 cm². In einer Prüfmaschine werden die Proben einer zeitlich veränderlichen Druckkraft ausgesetzt, die senkrecht auf die Fläche der Probe wirkt. Ein Sensor bestimmt die Änderung der Dicke der GDL im zeitlichen Verlauf bei dem jeweils einwirkenden Druck. Die Probe ist auf einer Vorrichtung zur Bestimmung der elastischen und plastischen Verformung mittels Kraftsensoren gelagert, wobei die Bewegung über Federn auf die Probe übersetzt wird. Der Verfahrweg bis zum Erreichen der maximalen Druckkraft wird über Wegsensoren bestimmt. Da die Verformung der Probe nichtlinear ist, wird der Messverlauf der relativen Veränderung angepasst. Ein Messzyklus, d.h. eine einmalige Belastung bis Maximaldruck und die folgende Entlastung dauert 1 min. Die Probe durchfährt drei Belastungszyklen. Der Anfangswert, bei dem nur eine geringe Kraft auf die Probe ausgeübt wird beträgt 0,025 MPa. Typische Druckwerte zur Bestimmung des Compression Set-Werts (und weiterer physikalicher Größen, wie der Dicke, der elektrischen Leitfähigkeit bzw. des Flächenwiderstands, der Gaspermeabilität, etc.) sind z.B. 0,6 MPa, 1,0 MPa und 2,4 MPa.

Der Compression Set-Wert für einen bestimmten Druck ergibt sich aus der Differenz der bei diesem Druck gemessenen Dicke im ersten Belastungszyklus und der bei diesem Druck im dritten Belastungszyklus gemessenen Dicke.

Bevorzugt weist die erfindungsgemäße GDL einen Compression Set-Wert bei 6 bar (0,6 MPa), gemessen nach dem zuvor beschriebenen Verfahren an einer ringförmigen Probe mit einem inneren Durchmesser von 45 mm und einem äußeren Durchmesser von 56 mm an einer GDL mit einem Flächengewicht von 60 bis 180 g/m² und einer MPL-Beladung von 10,0 bis 60,0 g/m² von höchstens 8 µm auf.

Es wurde gefunden, dass durch den teilweisen oder vollständigen Ersatz des fluorhaltigen Polymers b2) durch wenigstens ein fluorfreies, hochtemperaturbeständiges Polymer b1) der Compression Set-Wert weiter verringert werden kann. Dies gilt speziell für den Ersatz von PTFE durch wenigstens ein PEEK. Speziell weist die erfindungsgemäße GDL einen Compression Set-Wert bei 6 bar (bestimmt, wie zuvor angegeben) von höchstens 6,0 µm auf.

Die Bestimmung des (spezifischen) elektrischen Widerstandes durch die Ebene (through plane, TP) kann durch 4-Punkt-Messung in literaturbekannter Weise erfolgen. Es wurde gefunden, dass der teilweise oder vollständige Ersatz des fluorhaltigen Polymers b2) durch wenigstens ein fluorfreies, hochtemperaturbeständiges Polymer b1) im Wesentlichen nicht zu einer Erhöhung des Flächenwiderstands führt. Bei einem nur teilweisen Ersatz, wie z.B. von 1 bis 50 Gew.-%, kann dieser sogar verringert werden. Dies gilt speziell für den Ersatz von PTFE durch wenigstens ein PEEK.

Bevorzugt weist die erfindungsgemäße GDL einen elektrischen Widerstandes durch die Ebene (TP) bestimmt mittels Vierpunktmessung von höchstens 2,0 mOhm cm² auf.

### Brennstoffzelle

Ein weiterer Gegenstand der Erfindung ist eine Brennstoffzelle, umfassend wenigstens eine Gasdiffusionslage, wie zuvor definiert, oder erhältlich durch ein Verfahren, wie zuvor definiert.

Prinzipiell eignet sich die erfindungsgemäße Gasdiffusionslage für alle üblichen Brennstoffzelltypen. Bevorzugt handelt es sich bei der erfindungsgemäßen Brennstoffzelle um eine Protonenaustauschmembran-Brennstoffzelle (englisch: proton exchange membrane fuel cell, PEMFC). Protonenaustauschmembran-Brennstoffzellen werden auch als Polymerelektrolytbrennstoffzelle (englisch: polymer electrolyte fuel cell, PEFC) bezeichnet. Auf die zuvor gemachten Ausführungen zum Aufbau von Brennstoffzellen wird in vollem Umfang Bezug genommen.

Die erfindungsgemäßen Brennstoffzellen umfassen vorzugsweise eine Polymer-Elektrolyt-Membran, auf die auf der Anoden- und Kathodenseite eine Katalysatorschicht aufgebracht ist, die die Elektroden ausbildet. Bevorzugt befindet sich auf der Anoden- und/oder Kathodenseite eine Gasdiffusionslage (GDL) in Kontakt mit der Katalysatorschicht. Die Brennstoffzellen weisen speziell eine Polymer-Elektrolyt-Membran auf, auf die eine Katalysatorschicht aufgebracht ist, die mit der Oberfläche der mikroporösen Lage B) einer erfindungsgemäßen Gasdiffusionslage in Kontakt ist. Speziell weisen die Brennstoffzellen auf der Kathodenseite eine erfindungsgemäße Gasdiffusionslage auf, wobei die Katalysatorschicht mit der Oberfläche der mikroporösen Lage B) der Gasdiffusionslage in Kontakt ist. Spezieller weisen die Brennstoffzellen auf der Kathodenseite und auf der Anodenseite eine erfindungsgemäße Gasdiffusionslage auf, wobei sowohl die Kathodenschicht als auch die Anodenschicht jeweils mit der Oberfläche der mikroporösen Lage B) einer erfindungsgemäßen Gasdiffusionslage in Kontakt ist.

In einer Ausführungsform kann das Kathodenmaterial wenigstens ein hygroskopisches Material enthalten, um ein Austrocknen der Kathode zu vermeiden. Diese können dazu dienen, dass die Kathode mehr Wasser zurückhalten kann und somit der Elektrodenwiderstand verringert wird. Bevorzugt wird als hygroskopisches Material wenigstens eine Heteropolysäure eingesetzt, wie Zirkonium-phosphat (ZrP) und Zirkonium-Festphasenpartikel (ZrSPP), oder Oxide, wie ZrOz, TiO₂ und SiO₂.

Es ist ein Vorteil der Erfindung, dass die Gasdiffusionslage gezielt an die baulichen Gegebenheiten der Brennstoffzelle, der durch diese strömenden Betriebsmedien und/oder die Betriebsparameter der Brennstoffzelle angepasst werden kann.

Ein weiterer Gegenstand der Erfindung ist die Verwendung einer Gasdiffusionslage, wie zuvor definiert, oder erhältlich durch ein Verfahren, wie zuvor definiert, in einer Protonenaustauschmembran-Brennstoffzelle.

Die Erfindung wird anhand der folgenden, nicht einschränkend zu verstehenden Beispiele erläutert.

### BEISPIELE

### I) Herstellung von Gasdiffusionslagen

### Herstellungsbeispiel 1

Zur Herstellung eines flächigen elektrisch leitfähigen Materials wurde ein Vliesstoff aus 100% Kohlenstofffasern mit einer Flächenmasse von 65 g/m² eingesetzt. Zur Ausrüstung des Vliesstoffs wurde eine Imprägnierzusammensetzung gemischt, die bezogen auf den Feststoff 70 % Ruß und 30 % PTFE enthielt. Die Ausrüstung erfolgte durch Foulard-Imprägnierung mit einer wässrigen Dispersion mit 15 % Ausrüstungsgewicht bezogen auf die Masse des GDL-Substrat (entsprechend 10 g/m²). Anschließend erfolgte noch eine Trocknung für 5 Minuten bei 160 °C und eine Sinterung für 10 Minuten bei 400 °C. Auf das so erhaltene Substrat wurde dann zur Herstellung der Gasdiffusionslage eine MPL aufgebracht. Die Zusammensetzung des Beschichtungsmittels zur Herstellung der MPLs ist in Tabelle 1 wiedergegeben. Für die MPL-Beschichtung wurde auf das Fasermaterial eine MPL-Paste aufgetragen, die als polymeres Bindemittel PTFE und PEEK in wechselnden Anteilen und Ruß in destilliertem Wasser enthielt. Anschließend wurde das Fasermaterial bei 160 °C getrocknet und bei 400 °C gesintert. Die resultierende MPL-Beladung ist in Tabelle 1 wiedergegeben.

### II) Anwendungstechnische Messungen

Die Bestimmung der MPL-Adhäsion erfolgte nach der ASTM-Norm D6862-11 mit Scotch-Tape als adhäsivem Material. Die Werte sind in der folgenden Tabelle 1 angegeben. Es ist jeweils der Mittelwert aus drei Einzelmessungen angegeben.

Die Bestimmung des Compression Set-Werts erfolgte nach dem zuvor ausführlich beschriebenen Verfahren. Die Werte sind ebenfalls in der folgenden Tabelle 1 angegeben.

Die Bestimmung des (spezifischen) elektrischen Widerstandes durch die Ebene (through plane, TP) der GDL erfolgte mittels 4-Punkt-Messung. Auch die Ergebnisse dieser anwendungstechnischen Messungen sind in der Tabelle 1 dargestellt.

**Tabelle 1**

| **Zusammensetzung** | | | | | | |
|---|---|---|---|---|---|---|
| PTFE | Gew.-% | 20 | 18 | 15 | 10 | 0 |
| PEEK | Gew.-% | 0 | 2 | 5 | 10 | 20 |
| Ruß | Gew.-% | 80 | 80 | 80 | 80 | 80 |

| **Messwert** | | | | | | |
|---|---|---|---|---|---|---|
| Compression Set bei 6 bar (Differenz 1./3. Zyklus) | µm | 6,5 | 5,6 | 5,5 | 4,6 | 4,3 |
| Widerstand TP bei 0,6 MPa 4-Punkt, 1. Zyklus | mΩcm² | 2,5 | 2,1 | 1,9 | 2,5 | 2,8 |
| Widerstand TP bei 2,0 MPa 4-Punkt, 1. Zyklus | mΩcm² | 1,5 | 1,1 | 1,2 | 1,6 | 1,8 |
| MPL Adhäsion (MD, Mittelwert aus 3 Messungen) | N/m | 29 | 32 | 34 | 66 | 43 |

| | | | | | | |
|---|---|---|---|---|---|---|
| TP = through plane MD = in Maschinenrichtung | | | | | | |

## Patentansprüche

1. Gasdiffusionslage für eine Brennstoffzelle, umfassend
A) ein flächiges elektrisch leitfähiges Material und
B) eine mikroporöse Lage auf wenigstens einer der Flächen des elektrisch leitfähigen Materials, wobei die mikroporöse Lage leitfähige Partikel in einem polymeren Bindemittel umfasst, das wenigstens ein fluorfreies, hochtemperaturbeständiges Polymer b1) enthält, ausgewählt unter Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon.

2. Gasdiffusionslage nach Anspruch 1, wobei das polymere Bindemittel wenigstens ein fluorfreies, hochtemperaturbeständiges Polymer b1) und wenigstens ein davon verschiedenes fluorhaltiges Polymer b2) enthält, wobei das fluorhaltige Polymer b2) vorzugsweise ausgewählt ist unter Polytetrafluorethylen, Tetrafluorethylen-Hexafluorpropylen-Copolymeren, Perfluoralkoxy-Polymeren und Mischungen davon.

3. Gasdiffusionslage nach Anspruch 1 oder 2, wobei das flächige elektrisch leitfähige Material A) wenigstens ein Fasermaterial umfasst, vorzugsweise ausgewählt unter Kohlefaser-Vliesstoffen, Kohlefaser-Geweben und Mischungen davon.

4. Gasdiffusionslage nach einem der Ansprüche 2 oder 3, wobei das Gewichtsmengenverhältnis von b1) zu b2) in einem Bereich von 1 : 99 bis 100 : 0, vorzugsweise in einem Bereich von 5,0 : 95,0 bis 95,0 : 5,0, liegt.

5. Gasdiffusionslage nach einem der vorhergehenden Ansprüche, wobei zur Herstellung der mikroporösen Lage B) das polymere Bindemittel in einer Gewichtsmenge von 0,5 bis 50 Gew.-%, besonders bevorzugt von 1,0 bis 40 Gew.-%, insbesondere von 10 bis 25 Gew.-%, bezogen auf des Gesamtgewicht aus polymeren Bindemitteln und leitfähigen Partikeln, eingesetzt wird.

6. Gasdiffusionslage nach einem der vorhergehenden Ansprüche, wobei die mikroporöse Lage eine Dicke im unkomprimierten Zustand von 5 bis 100 Mikrometer, bevorzugt 10 bis 50 Mikrometer, aufweist.

7. Gasdiffusionslage nach einem der vorhergehenden Ansprüche, wobei das polymere Bindemittel als fluorfreies, hochtemperaturbeständiges Polymer b1) wenigstens ein Polyaryletherketon, bevorzugt ausgewählt unter Polyetherketonen, Polyetheretherketonen und Polyetherketonketonen, umfasst oder das Polymer b1) aus wenigstens einem Polyaryletherketon, bevorzugt ausgewählt unter Polyetherketonen, Polyetheretherketonen und Polyetherketonketonen, besteht.

8. Gasdiffusionslage nach einem der vorhergehenden Ansprüche, wobei das polymere Bindemittel als fluorfreies, hochtemperaturbeständiges Polymer b1) wenigstens ein Polyetheretherketonen umfasst oder aus wenigstens einem Polyetheretherketon besteht.

9. Gasdiffusionslage nach einem der vorhergehenden Ansprüche, wobei das fluorfreie, hochtemperaturbeständige Polymer b1) zur Herstellung der mikroporösen Lage in partikulärer Form mit einem mittleren Teilchendurchmesser, gemessen als d90-Wert, in einem Bereich von 0,1 bis 50 µm, bevorzugt in einem Bereich von 0,2 bis 30 µm, eingesetzt wird.

10. Verfahren zur Herstellung einer Gasdiffusionslage für eine Brennstoffzelle, bei dem man
i) ein flächiges elektrisch leitfähigen Fasermaterial A) bereitstellt,
ii) das in Schritt i) bereitgestellte Fasermaterial mit einem Beschichtungsmittel zur Ausbildung einer mikroporösen Lage beschichtet, wobei das Beschichtungsmittel wenigstens ein fluorfreies, hochtemperaturbeständiges Polymer b1) enthält, ausgewählt unter Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon,
iii) das in Schritt ii) erhaltene beschichtete Fasermaterial einer thermischen Nachbehandlung unterzieht.

11. Verfahren nach Anspruch 10, wobei die thermische Behandlung in Schritt ii) bei einer Temperatur oberhalb der Schmelztemperatur des Polymers b1) oder, wenn das Beschichtungsmittel mehr als ein Polymer b1) enthält, oberhalb des Schmelzpunkts des Polymers b1) mit dem niedrigsten Schmelzpunkt, vorzugsweise oberhalb des Schmelzpunkts des Polymers b1) mit dem höchsten Schmelzpunkt, erfolgt.

12. Gasdiffusionslage, erhältlich durch ein Verfahren, wie in Anspruch 10 oder 11 definiert.

13. Brennstoffzelle, umfassend wenigstens eine Gasdiffusionslage, wie in einem der Ansprüche 1 bis 9 definiert, oder erhältlich durch ein Verfahren, wie in Anspruch 10 oder 11 definiert.

14. Brennstoffzelle, nach Anspruch 13, umfassend eine Polymer-Elektrolyt-Membran, auf die eine Katalysatorschicht aufgebracht ist, wobei die Katalysatorschicht mit der Oberfläche der mikroporösen Lage B) der Gasdiffusionslage in Kontakt ist.

15. Verwendung eines flächigen elektrisch leitfähigen Materials A), das auf wenigstens einer seiner Flächen eine mikroporöse Lage B) umfasst, wobei die mikroporöse Lage leitfähige Partikel in einem polymeren Bindemittel umfasst, das wenigstens ein fluorfreies, hochtemperaturbeständiges Polymer b1) enthält, ausgewählt unter Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon, als eine oder in einer Gasdiffusionslage für eine Brennstoffzelle.

16. Verwendung einer Gasdiffusionslage, wie in einem der Ansprüche 1 bis 9 definiert, oder erhältlich durch ein Verfahren, wie in einem der Ansprüche 10 oder 11 definiert, in einer Protonenaustauschmembran-Brennstoffzelle.
